# EUROPÄISCHE PATENTANMELDUNG

(11) **EP 4 656 045 A1**
(43) Veröffentlichungstag der Anmeldung: **03.12.2025**
(21) Anmeldenummer: 25177237.2
(22) Anmeldetag: 19.05.2025
(51) Int. Cl.: A01M 13/00, A01M 17/00

(54) **VORRICHTUNG ZUR BEKÄMPFUNG VON BODENSCHÄDLINGEN**

(30) Priorität: 29.05.2024 DE 202024102797 U
(71) Anmelder: Baumann Handels GmbH, 67661 Kaiserslautern (DE)
(72) Erfinder: Baumann, Peter, 67661 Kaiserslautern (DE)
(74) Vertreter: Patentanwaltskanzlei Vièl & Wieske PartGmbB

(57) **Zusammenfassung**

Vorrichtung (0) zur Bekämpfung von Bodenschädlingen, wobei die Vorrichtung (0) einen nach unten geöffneten Behälter (7) aufweist, wobei der Behälter (7) durch einen horizontalen Boden in eine Brennkammer (2) und eine Rauchkammer (5) unterteilt ist, wobei der Boden zur Aufnahme von Brennmaterial (3) ausgelegt ist, wobei die Brennkammer (2) und die Rauchkammer (5) durch einen Kamin (8) verbunden sind, wobei der Behälter (7) eine Einlassöffnung (4) aufweist.

Der Behälter (7) kann dabei wie eine Glocke auf das Mauseloch gestellt werden. Auf dem horizontalen Boden der Vorrichtung (0) kann Brennmaterial (3), beispielsweise Holz, Holzspäne, Holzkohle oder Steinkohle entzündet werden. Das Brennmaterial (3) erzeugt bei der Verbrennung Rauchgase, insbesondere Kohlenstoffmonoxid. Die Rauchgase können durch den Kamin (8) von der Brennkammer (2) in die Rauchkammer (5) gelangen. Auf dem Weg zur Rauchkammer (5) kühlen die Rauchgase ab und dringen durch das Mauseloch in das Erdreich ein. Dadurch werden die Bauten der Bodenschädlinge mit Rauchgas geflutet.

## Beschreibung

Die vorliegende Erfindung betrifft eine Vorrichtung zur Bekämpfung von Bodenschädlingen.

Zu den Bodenschädlingen gehören insbesondere Wühlmäuse, Feldmäuse oder Ratten. Wühlmäuse sind ganzjährig aktive Schädlinge. Sie bilden stabile Populationen, die in manchen Jahren zu einer massiven Plage heranwachsen können. Sie schädigen Wurzelgemüse, aber auch Obstbäume und andere Zier- und Nutzpflanzen. Die Gänge und Schäden, die durch Wühlmäuse verursacht werden, lassen sich einfach von den Bauten von Maulwürfen, die Insektenfresser sind und daher keine Schäden an Pflanzen verursachen, unterscheiden.

Es sind verschiedene Methoden zur Bekämpfung oder Vergrämung von Wühlmäusen bekannt. Dazu gehören Mausefallen, Giftkörper oder Begasungsmittel.

Nachteilig an der Vergrämung ist, dass diese nur kurzzeitig wirkt, wobei bereits kurz nach der Behandlung sich die Wühlmäuse in dem behandelten Gebiet wieder ansiedeln.

Die Bekämpfung mit Mausefallen ist aufwendig und zeitintensiv. Bei der Bekämpfung mit Mausefallen werden nur wenige Tiere gefangen. Bei der hohen Reproduktionsrate von Wühlmäusen ist diese Methode ineffektiv und nur wenig erfolgversprechend.

Das Arbeiten mit Giftködern ist in vielerlei Hinsicht problematisch. Das Hantieren mit den Giftködern gefährdet den Anwender. Auch werden andere Tierarten durch Aufnahme der Giftköder oder der getöteten Wühlmäuse gefährdet.

Eine Begasung des gesamten Gangsystems kann einen großen Teil der Baubewohner bekämpfen. Begasung durch Gaspatronen, Gasflaschen oder das Einleiten von chemisch reagierenden Atemgiften ist für den Anwender bei Einatmung dieser Stoffe gesundheitsgefährdend. Durch falsche Lagerung dieser Stoffe kann es zu einer Gefährdung des Anwenders kommen.

Es ist bekannt, dass man Schädlinge, vornehmlich Wühlmäuse und Feldmäuse mit Kohlenmonoxid ersticken kann, und zwar in der Weise, dass man dieses Giftgas in die unterirdischen Baue einleitet.

Gegenüber anderen Giften weist das Einleiten von Kohlenmonoxid in den Bau den Vorteil auf, dass andere Tiere, beispielsweise Geflügel, Wild, Vögel sowie auch die Vegetation auf diese Weise nicht geschädigt werden.

Der praktischen Verwendung von Kohlenmonoxid steht aber entgegen, dass in jeder Hinsicht brauchbare Vorrichtungen nicht bekannt sind. Sie müssen nämlich ungiftig, billig, leicht transportabel, ungefährlich und wirksam sein.

Vorrichtungen zur Bekämpfung von Bodenschädlingen mit Abgasen sind bekannt. Dabei werden die Abgase in den durch unterirdische Gänge verbundenen Bau der Schädlinge geleitet. Insbesondere durch das in den Abgasen enthaltene Kohlenmonoxid werden die Schädlinge schnell und schmerzlos getötet. Die Bekämpfung erfolgt beispielsweise in Gärten, Gartenanlagen, Zierflächen und Flächen landwirtschaftlicher Nutzung.

Die DE12 633 92 A betrifft eine Vorrichtung zum Erzeugen von Kohlenoxid zur Bekämpfung von Bodenschädlingen. Die Vorrichtung besteht aus einem gasdichten, mit einem Feuerungsrost für einen Brennstoff versehenen Ofen mit einer Abgasausleitung und einem an sie angeschlossenen Gebläse. Die Druckseite des Gebläses ist zu den Bauen führbar, wodurch die Abgase in die Gänge geleitet werden können.

Die DE 10 2020 005 571 A1 offenbart eine Vorrichtung zu Bekämpfung von Wühlmäusen. Die Vorrichtung umfasst ein Gefäß zur Aufnahme von Holzkohle oder Grillkohle mit einer gasdurchlässigen Wand, an die ein Kanal anschließt, der durch ein Gebläse die Verbrennungsgase abführt und in die Öffnung eines Wühlmausbaues einleitet.

Nachteilig an den oben genannten Vorrichtungen ist, dass das Gebläse ein zusätzliches Gewicht aufweist, wodurch die Mobilität der Vorrichtung eingeschränkt wird. Zusätzlich benötigt das Gebläse eine Energiequelle und kann durch die Abgase beschädigt werden. Insbesondere kann es bei zu heißen Abgasen aufgrund einer zusätzlichen Anfeuerung des Brennmaterials durch Luftzufuhr durch den Unterdruck des Gebläses zu Beschädigungen kommen. Zudem können durch das Einleiten von Abgasen von Verbrennungsmotoren in die Baue Öle oder Schwermetalle in das Erdreich gelangen.

Der Erfindung liegt die Aufgabe zugrunde, eine verbesserte Vorrichtung zur Schädlingsbekämpfung bereitzustellen.

Die Aufgabe wird bei einer Vorrichtung zur Bekämpfung von Bodenschädlingen dadurch gelöst, dass die Vorrichtung einen nach unten geöffneten Behälter aufweist, wobei der Behälter durch einen horizontalen Boden in eine Brennkammer und eine Rauchkammer unterteilt ist, wobei der Boden zur Aufnahme von Brennmaterial ausgelegt ist, wobei die Brennkammer und die Rauchkammer durch einen Kamin verbunden sind, wobei der Behälter eine Einlassöffnung aufweist.

Die Vorrichtung kann mit dem offenen unteren Ende des Behälters auf ein Mauseloch auf dem zu behandelnden Gelände gestellt werden. Das Mauseloch kann ein von dem Bodenschädling gebautes Loch im Erdreich sein. Das Mauseloch kann auch eine künstliche Öffnung eines Gangs des Bodenschädlings sein. Der Behälter kann dabei wie eine Glocke auf das Mauseloch gestellt werden. Auf dem horizontalen Boden der Vorrichtung kann Brennmaterial, beispielsweise Holz, Holzspäne, Holzkohle oder Steinkohle entzündet werden. Das Brennmaterial erzeugt bei der Verbrennung Rauchgase, insbesondere Kohlenstoffmonoxid. Die Rauchgase können durch den Kamin von der Brennkammer in die Rauchkammer gelangen. Der Kamin kann dabei über den horizontalen Boden hinausragen. Dadurch wird verhindert, dass Brennmaterial in die Rauchkammer gelangt. Auf dem Weg zur Rauchkammer kühlen die Rauchgase ab und dringen durch das Mauseloch in das Erdreich ein. Dadurch werden die Bauten der Bodenschädlinge mit Rauchgas geflutet.

Vorteilhaft werden die Tiere nicht durch die Vibrationen eines Verbrennungsmotors vertrieben. Die Anwendung der Vorrichtung ist ungefährlich, eine Vergiftung des Bedieners wird vermieden. Die Vorrichtung kann sicher eingelagert werden, ohne dass die Gefahr des Austritts von Giftgasen besteht. Die Vorrichtung besitzt ein geringes Gewicht, ist leicht transportabel und einfach zu bedienen.

Vorteilhaft kann das für eine Behandlung notwendige Brennmaterial eingefüllt und entzündet werden. Die Behandlung endet dabei von selbst, wenn das Brennmaterial aufgebrauch ist. Vorteilhaft bleibt beim Verbrennen des Brennmaterials nur Asche zurück. Alternativ kann Brennmaterial nachgefüllt werden, um die Behandlungszeit zu verlängern.

Es wird kein zusätzlicher Verbrennungsmotor benötigt und die Vorrichtung ist leichter zu transportieren und kann insbesondere in unwegsamen oder entlegenen Geländen eingesetzt werden. Zusätzlich wird die Lärmbelastung reduziert

Vorteilhaft verursacht der Einsatz von Kohlenmonoxid einen schnellen und schmerzlosen Tod der Schädlinge. Das Kohlenmonoxid kann sich dabei in dem Gangsystem der Schädlinge verteilen und auch entlegene Rückzugsorte erreichen.

Vorteilhaft ist die Schädlingsbekämpfung für andere Tiere, beispielsweise Katzen, Hunde, Füchse und Pflanzen gefahrlos. Die toten oder betäubten Schädlinge können von diesen gefressen bzw. zersetzt werden, ohne dass die Gefahr einer Sekundärvergiftung besteht. Das behandelte Gelände kann gefahrlos nach und während der Behandlung betreten und genutzt werden.

Durch die Einlassöffnung kann Verbrennungsluft in die Brennkammer gelangen. Die Einlassöffnung kann im Bereich der Brennkammer angeordnet sein. Insbesondere kann durch ein Gebläse zusätzliche Verbrennungsluft in die Brennkammer geleitet werden. Besonders vorteilhaft kann das Brennmaterial durch ein Gebläse besonders einfach entzündet werden. Ein aufwendiger Hitzeschutz für das Gebläse ist nicht notwendig. Das Gebläse kann nicht durch Rauchgase beschädigt werden. Das Gebläse kann ein Kompressor, ein Blasebalg oder eine Luftpumpe sein.

Dabei ist es zweckmäßig, dass die Einlassöffnung mit einem Gebläse verbindbar ist.

Die Einlassöffnung kann dabei Mittel zum Verbinden mit einem Gebläse, beispielsweise ein Gewinde oder einen zylindrischen Stutzen zum Überstülpen eines Schlauches aufweisen. Vorteilhaft kann das Gebläse lösbar mit der Vorrichtung verbunden werden.

Eine weitere Ausgestaltung der Erfindung besteht darin, dass der Behälter an seinem oberen Ende einen verschließbaren Deckel aufweist.

Durch den Deckel kann Brennmaterial in die Brennkammer gefüllt werden. Die Rückstände der Verbrennung können aus der Brennkammer entfernt werden. Der Deckel kann einen Griff aufweisen. Der Deckel kann eine feuerfeste Dichtung aufweisen, wodurch der Deckel das obere Ende des Behälters luftdicht verschließen kann.

Im Folgenden wird ein Ausführungsbeispiel der Erfindung anhand von Zeichnungen näher erläutert.

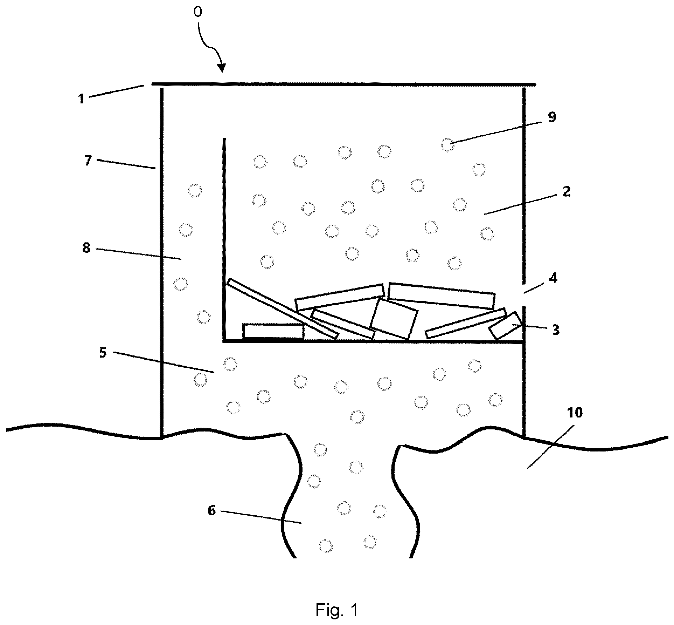

Es zeigt
- Fig.1: einen Querschnitt einer erfindungsgemäßen Vorrichtung.

In Fig. 1 ist ein Ausführungsbeispiel einer erfindungsgemäßen Vorrichtung zur Bodenschädlingsbekämpfung 0 dargestellt. Sie weist einen feuerfesten Behälter 7 mit einem Deckel 1 auf. Die untere Seite des Behälters ist offen und kann auf das zu behandelnde Gelände auf das Erdreich 10 gestellt werden. Der Deckel 1 kann einen Griff aufweisen. Der Behälter 7 ist horizontal durch einen Boden in eine Brennkammer 2 und eine Rauchkammer 5 getrennt. Auf dem horizontalen Boden kann Brennmaterial 3, beispielsweise Holz, Holzspäne, Holzkohle oder Steinkohle verbrannt werden. Durch die Verbrennung entstehen Rauchgase 9, insbesondere Kohlenstoffmonoxid. Die obere Brennkammer 2 und die untere Rauchkammer 5 sind durch einen Kamin 8 verbunden, durch dien die Rauchgase 9 von der Brennkammer 2 zuerst in die Rauchkammer 5 und dann in das Mauseloch 6 geleitet werden. In der oberen Brennkammer 2 befindet sich eine Einlassöffnung 4 durch die Verbrennungsluft in den Behälter 7 eingelassen werden kann.

Zum Einleiten von Verbrennungsluft kann ein Gebläse, beispielsweise ein Kompressor, Blasebalg oder eine Luftpumpe verwendet werden. Dazu kann das Gebläse an die Einlassöffnung 4 gehalten oder mit dieser verbunden werden. Vorteilhaft kann das Gebläse nicht durch Verbrennungsgase beschädigt werden. Das Gebläse kann zum Anfeuern des Brennmaterials verwendet werden.

Bei der Behandlung wird in der oberen Brennkammer 2 Brennmaterial 3 entzündet. Hat das Brennmaterial 3 angefangen zu brennen, wird die Brennkammer 2 durch den Deckel 1 verschlossen. Durch Hineinblasen von frischer Luft mit einem Gebläse durch die Einlassöffnung 4 glimmt das Brennmaterial 3 weiter und erzeugt so Rauchgase 9, insbesondere Kohlenmonoxid. Die Rauchgase werden durch den Kamin 8 in die untere Rauchkammer 5 gedrückt und von dort in das Mauseloch 6 geleitet.

Im Erdreich 10 kühlen die Rauchgase 9 ab und sinken so immer tiefer in den Bau, verbreiten sich in den einzelnen Wohnkammern und erstickten die Bodenschädlinge. Hier ist vorteilhaft, dass die erwachsenen Mäuse samt den Jungtieren bekämpft werden. Ein weiterer Vorteil ist, dass auch die toten Bodenschädlinge ungiftig sind.

Nach dem Gebrauch der Vorrichtung 0 können die verbliebenen Verbrennungsrückstände des Brennmaterials 3 kompostiert werden.

## Patentansprüche

1. Vorrichtung (0) zur Bekämpfung von Bodenschädlingen, **dadurch gekennzeichnet, dass** die Vorrichtung (0) einen nach unten geöffneten Behälter (7) aufweist, wobei der Behälter (7) durch einen horizontalen Boden in eine Brennkammer (2) und eine Rauchkammer (5) unterteilt ist, wobei der Boden zur Aufnahme von Brennmaterial (3) ausgelegt ist, wobei die Brennkammer (2) und die Rauchkammer (5) durch einen Kamin (8) verbunden sind, wobei der Behälter (7) eine Einlassöffnung (4) aufweist.

2. Vorrichtung (0) gemäß Anspruch 1, **dadurch gekennzeichnet, dass** die Einlassöffnung (4) mit einem Gebläse verbindbar ist.

3. Vorrichtung (0) gemäß einem der Ansprüche 1 oder 2, **dadurch gekennzeichnet, dass** der Behälter (7) an seinem oberen Ende einen verschließbaren Deckel (1) aufweist.
